# EUROPÄISCHE PATENTSCHRIFT

(11) **EP 3 683 077 B1**
(45) Veröffentlichungstag und Bekanntmachung des Hinweises auf die Patenterteilung: **17.12.2025**
(21) Anmeldenummer: 19218244.2
(22) Anmeldetag: 19.12.2019
(51) Int. Cl.: B60K 1/00, F01P 11/02, F01P 3/18, B60K 11/04

(54) **KÜHLVORRICHTUNG**
COOLING DEVICE
DISPOSITIF DE REFROIDISSEMENT

(30) Priorität: 16.01.2019 DE 102019000283
(43) Veröffentlichungstag der Anmeldung: 22.07.2020
(73) Patentinhaber: Hydac Cooling GmbH, 66280 Sulzbach/Saar (DE)
(72) Erfinder: Welsch, Andreas, 66740 Saarlouis (DE)
(74) Vertreter: Bartels und Partner, Patentanwälte

(56) Entgegenhaltungen:
- WO-A1-2013/135336
- DE-A1- 102017 011 430
- DE-B3- 10 331 216
- FR-A1- 2 722 834
- US-A1- 2013 306 300

## Beschreibung

Die Erfindung betrifft eine Kühlvorrichtung mindestens einem Kühlkreislauf, an den zumindest ein Verbraucher angeschlossen ist, gemäß der Merkmalsausgestaltung des Oberbegriffs des Patentanspruches 1.

Kühlvorrichtungen dieser Art sind Stand der Technik, vgl. beispielsweise DE 197 11 591 A1 und US 2013/0306300 A1. Solche Kühlvorrichtungen kommen in unterschiedlicher Auslegung auf verschiedenen Gebieten zum Einsatz, beispielsweise in Hydraulik- oder Flüssigkeitskreisläufen von Anlagen oder Maschinen, zur Kühlung von Kühlschmiermitteln, für die Kühlung elektrischer Anlagen, Gebäuden und dergleichen. Der Kühlkreislauf kann, wie es in dem genannten Dokument gezeigt ist, als geschlossenes System ausgebildet sein, wobei das Fluid unter einem Vordruck steht. Um die bei Temperaturänderungen des Fluids auftretenden Volumenänderungen auszugleichen, ist hierbei ein Ausgleichsgefäß, in der Regel in Form eines Hydrospeichers, vorgesehen. Ein Vorteil des geschlossenen Systems besteht darin, dass die Fluidmenge im System verhältnismäßig klein gehalten werden kann, so dass kein größerer Vorratstank erforderlich ist und gegebenenfalls ein solcher durch das im Hydrospeicher befindliche Fluidvolumen ersetzt sein kann. Da das Kühlmedium keinen Kontakt zur Atmosphäre hat, besteht keine Gefahr, dass es bei Wassergemischen zum Medienverlust durch Verdunstung kommen kann und dass auch kein Eintrag von Schmutzpartikeln möglich ist. Nachteilig ist beim geschlossenen System, dass eine Drucküberwachung notwendig ist und dass die Befüllung und Entlüftung des Systemkreislaufs aufwendig unter Druck prozedurgebunden durchgeführt werden muss. Hinzu kommt der Aufwand für den erforderlichen Hydrospeicher.

Bei Auslegung des Kühlkreislaufs als atmosphärisch offenes System ist der Vorratstank, der in der Regel über ein Belüftungsfilter zur Atmosphäre hin offen ist, zum größeren Teil mit Fluid gefüllt, d.h. Volumenänderungen des Fluids führen zum teilweisen Austausch von oberhalb des Fluidniveaus im Vorratstank befindlicher Luft nach außen oder von außerhalb in den Tank. Vorteile sind der wartungsarme Betrieb, die einfache Bauweise, die einfache Befüllung des Kühlkreislaufs und die selbständige Entlüftung. Nachteilig sind der Kühlmediumverlust durch Verdunstung bei Wassergemischen und das üblicherweise erforderliche größere Flüssigkeitsvolumen, das eine entsprechende Tankgröße und Bedarf an Einbauraum bedingt. Weitere Kühlvorrichtungen gehen aus WO 2013/135336 A1, DE 2017 011 430 A1, DE 103 31 216 B3 und FR 2 722 834 A1 hervor.

Ausgehend von diesem Stand der Technik stellt sich die Erfindung die Aufgabe, eine Kühlvorrichtung der eingangs genannten Gattung zur Verfügung zu stellen, die bei Nutzung von Vorteilen der vorerwähnten Systeme des Standes der Technik sich durch weiter verbesserte Betriebseigenschaften auszeichnet.

Erfindungsgemäß ist diese Aufgabe durch eine Kühlvorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass der Kühlkreislauf in der Art eines halb-geschlossenen Kühlkreises ausgebildet ist, in dem das Innere des ansonsten zur Atmosphäre hin abgeschlossenen Vorratstanks mit dieser über eine Be- und Entlüftungseinrichtung verbindbar ist, deren eine Be- bzw. Entlüftung des Vorratstanks erlaubenden Druckgrenzwerte derart vorgegeben sind, dass im Normalbetrieb kein Austausch zwischen dem Inneren des Vorratstanks und der Atmosphäre stattfindet und dass in einer ebenflächigen Oberseite des Vorratstanks sich eine zwischen zwei Seiten durchgehende stufenartige Vertiefung befindet, in der der Wärmetauscher in Form eines im Umriss an die Vertiefung angepassten Quaders aufgenommen ist, der lediglich einen geringen Überstand über die sonstige Oberseite besitzt.

Mit dem im Normalbetrieb geschlossenen Vorratstank und fehlendem Kontakt des Kühlmediums zur Atmosphäre, vermeidet der erfindungsgemäß ausgelegte Kühlkreislauf gegenüber einem offenen System den Nachteil, dass durch Kontakt zur Atmosphäre ein Kühlmediumverlust durch Verdunstung bei Einsatz von Wassergemischen erfolgt. Wegen der Drucklosigkeit im Ruhezustand nutzt die Erfindung gleichzeitig den Vorteil des offenen Systems der einfachen Befüllung und selbständigen Entlüftung. Diesen Vorteil nutzt die Erfindung auch gegenüber einem geschlossenen Kreislauf, der im Ruhezustand druckbeaufschlagt ist, so dass eine aufwendige prozedurgebundene Befüllung und Entlüftung des Kühlkreislaufs unter Druck erforderlich ist.

Durch die am geschlossenen Vorratstank vorgesehene Be- und Entlüftungseinrichtung, die eine Be- und Entlüftung des geschlossenen Vorratstanks nur bei Überschreiten oder Unterschreiten eines dem Normalbetrieb entsprechenden Druckbereichs ermöglicht, dient der Vorratstank auch als Ausgleichseinrichtung für die Druckänderung durch Erwärmung oder Abkühlung des Mediums, so dass eine separate Ausgleichseinrichtung, wie ein Hydrospeicher bei geschlossenen Systemen, in Wegfall kommt, bei gleichzeitiger selbsttätiger Entlüftung des Systems. Darüber hinaus nutzt die Erfindung die Vorteile des Einsatzes einer Tauchpumpe als Vorratspumpe. Während "trocken" aufgestellte Pumpen auf Dauer nicht völlig leckagefrei arbeiten, weil eine 100%ige Abdichtung praktisch nicht möglich ist, so dass bei diesen Pumpen immer eine wenn auch sehr kleine Fluidmenge austritt, sind diese Verluste bei Einsatz der Tauchpumpe vermieden, weil eine an einer Wellenabdichtung entstehende Leckagemenge unterhalb des Tankdeckels austritt und somit innerhalb des Tanks verbleibt. Da der hydraulische Pumpenteil unmittelbar in das Fluid eingetaucht ist, ist kein zusätzlicher Schlauch- oder Rohranschluss zur Zuführung des Fluids zum Eintritt in die Pumpe erforderlich.

Mit Vorteil ist der Motor für die Tauchpumpe außerhalb des Vorratstanks angeordnet, wobei die Antriebswelle des Motors mit der Pumpenwelle der Tauchpumpe, vorzugsweise mit dieser einstückig ausgebildet, fest verbunden ist und eine Abschlusswand des Vorratstanks durchgreift.

Bei vorteilhaften Ausführungsbeispielen weist die Be- und Entlüftungseinrichtung eine Ventilanordnung auf, die sicherstellt, dass der Druckgrenzwert für eine Entlüftung höher ist als der Druckgrenzwert für eine Belüftung.

In vorteilhafter Weise kann die Ventilanordnung gegenläufig arbeitende, vorzugsweise federbelastete, Rückschlagventile oder Blenden aufweisen, die auf unterschiedliche Druckgrenzwerte zu ihrer Betätigung bzw. möglichem Durchlass eingestellt sind.

In Anpassung an die Betriebsbedingungen des Kühlkreislaufs können das Volumen des Vorratstanks und das Luftvolumen, das sich oberhalb des Fluidniveaus befindet, in das die Tauchpumpe eintaucht, so gewählt sein, dass bei Einstellung der Be- und Entlüftungseinrichtung auf Druckgrenzwerte, die für eine Entlüftung zwischen +0,2 bis + 0,7 bar, vorzugsweise bei +0,5 bar, und für eine Belüftung zwischen - 0,01 bis - 0,05 bar, vorzugsweise bei - 0,02 bar, liegen, kein Luftaustausch stattfindet.

In vorteilhafter Weise kann zumindest der Wärmetauscher, der Vorratstank, vorzugsweise mit der Be- und Entlüftungseinrichtung, sowie der Motor mit der Tauchpumpe eine handelbare und aufstellbare Baueinheit bilden, deren Komponenten zumindest über eine Trägerplatte miteinander verbunden sind.

Bei der Erfindung erfolgt das Befüllen des Vorratstanks aufgrund der Be- und Entlüftungseinrichtung vor der Inbetriebnahme ohne Druckaufbau als Druckvorspannung für den Kühlkreislauf. Der Füllvorgang ist daher einfach und sicher durchführbar.

Die erfindungsgemäße Kühlvorrichtung eignet sich in besonderem Maße für Einsätze, bei denen der Verbraucher eine Batterie und/oder ein Umrichter und/oder ein Elektromotor für ein zumindest teilweise batteriebetriebenes Fahrzeug ist.

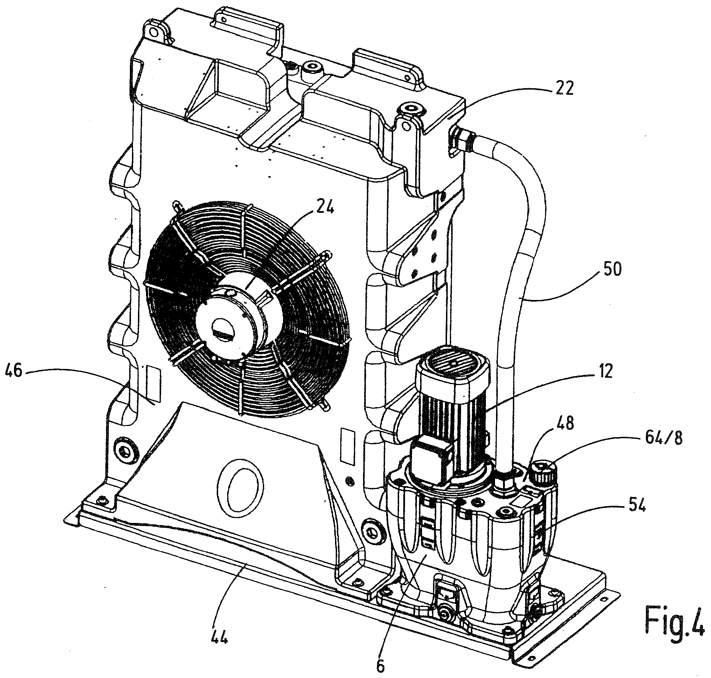

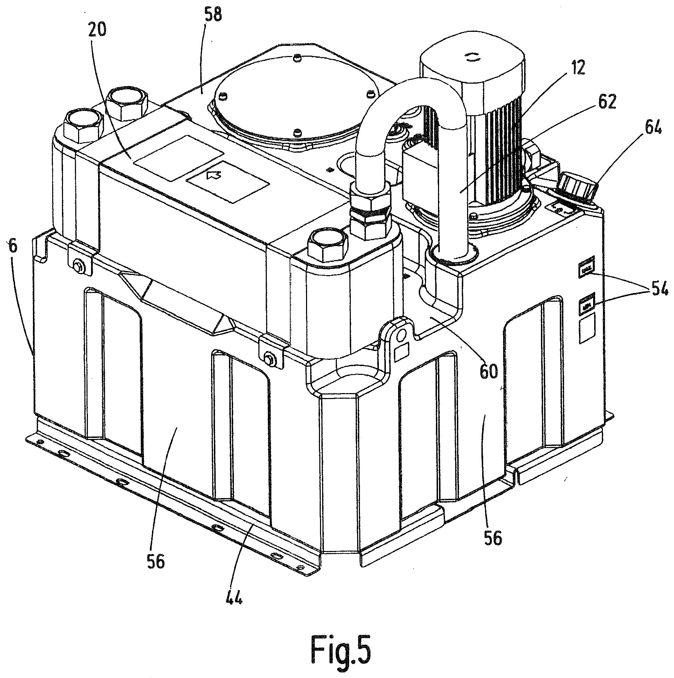

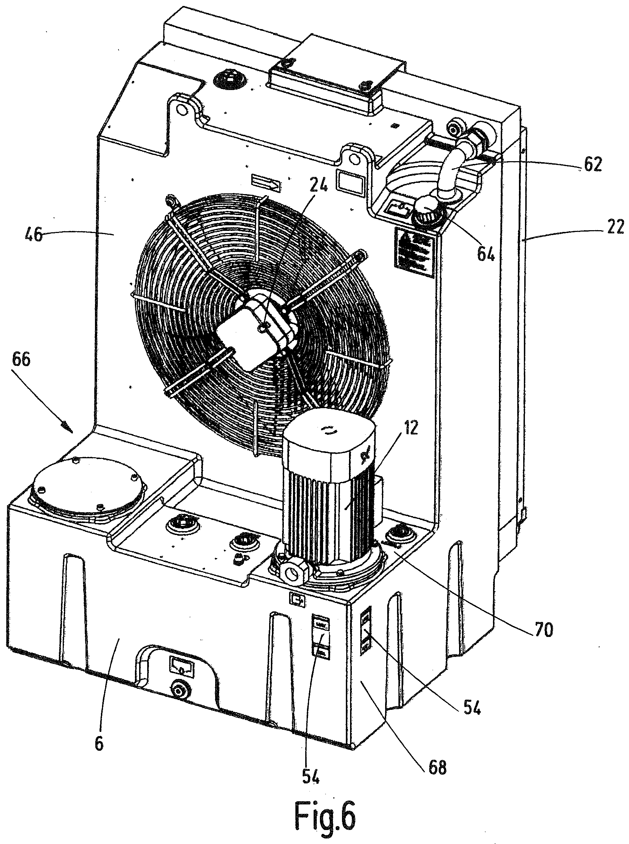

Nachfolgend ist die Erfindung anhand von einem in der Zeichnung dargestellten Ausführungsbeispiel nach der Fig. 5 im Einzelnen näher erläutert, wohingegen die Lösungen nach den Fig. 4 und 6 ausschließlich der technischen Erläuterung dienen und nicht vom Schutzbereich erfasst sind.

Es zeigen:
- Fig. 1 und 2: in Symboldarstellung die hydraulische Schaltung des Kühlkreislaufs von zwei Kühlvorrichtungen des Standes der Technik;
- Fig. 3: in Symboldarstellung die hydraulische Schaltung des Kühlkreislaufs eines Ausführungsbeispiels der erfindungsgemäßen Kühlvorrichtung;
- Fig. 4: eine perspektivische Schrägansicht auf eine Kühlvorrichtung;
- Fig. 5: eine perspektivische Schrägansicht eines Ausführungsbeispiels der erfindungsgemäßen Kühlvorrichtung;
- Fig. 6: eine perspektivische Schrägansicht auf eine weitere Kühlvorrichtung; und
- Fig. 7: in der Art einer vereinfachten Skizze ein Elektromobil, das mit einer erfindungsgemäßen Kühlvorrichtung versehen ist.

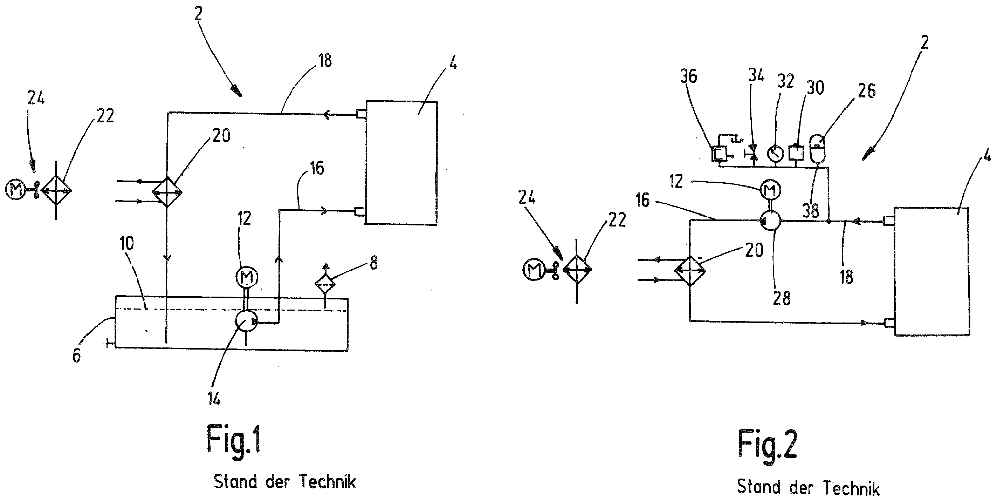

Die Fig. 1 zeigt von einer dem Stand der Technik entsprechenden Kühlvorrichtung 2, die zur Kühlung eines Verbrauchers 4 vorgesehen ist, den Kühlkreislauf, der in Form eines offenen Kreislaufs ausgebildet ist. Dieser weist einen ein Kühlmittel, wie ein Wasser-Glykol-Gemisch, aufnehmenden Vorratstank 6 auf, der zur Atmosphäre über ein Belüftungsfilter 8 offen ist. Eine in das Fluidniveau 10 im Tank 6 eintauchende, von einem Motor 12 angetriebene Tauchpumpe 14 fördert das Kühlmittel über eine Vorlaufleitung 16 zum Verbraucher 4. Von diesem strömt das erwärmte Kühlmittel über eine Rücklaufleitung 18 und einen Wärmetauscher 20 bzw. 22 zum Tank 6 zurück. Bei dem Wärmetauscher kann es sich um einen Plattenwärmetauscher 20 (wie er auch bei dem in Fig. 5 gezeigten Ausführungsbeispiel der Erfindung eingesetzt ist) handeln, bei dem der Wärmeaustausch zum Kühlmittel durch ein flüssiges Kühlmedium erfolgt, oder um einen Lamellenkühler 22 (bei dem in den Fig. 4 und 6 gezeigten Ausführungsbeispiel der Erfindung eingesetzt) handeln, der durch Kühlluft mittels eines motorisch betätigten Gebläses 24 gekühlt ist.

Die Fig. 2 zeigt die hydraulische Schaltung einer zweiten Kühlvorrichtung des Standes der Technik, wobei ein geschlossener Kreislauf vorgesehen ist. Als Ausgleichseinrichtung für die Druckänderungen, die sich im druckbeaufschlagten und zur Atmosphäre abgeschlossenen System bei den Temperaturänderungen des Kühlmittels ergeben, ist ein Hydrospeicher 26 vorgesehen, der mit seiner Flüssigkeitsseite 38 an die Rücklaufleitung 18 angeschlossen ist, die vom Verbraucher 4 zur Versorgungspumpe 28 führt. Da bei Vorhandensein des Speichers 26 kein zusätzlicher Vorratstank vorhanden ist, ist die Versorgungspumpe 28 trocken aufgestellt. Für die erforderliche Drucküberwachung des auch im Ruhezustand druckbeaufschlagten Systems sind an der Rücklaufleitung 18 ein Drucksensor 30, ein Druckanzeiger 32, ein Füll- und Ablassventil 34 sowie ein Druckbegrenzungsventil 36 an der Flüssigkeitsseite 38 angeschlossen.

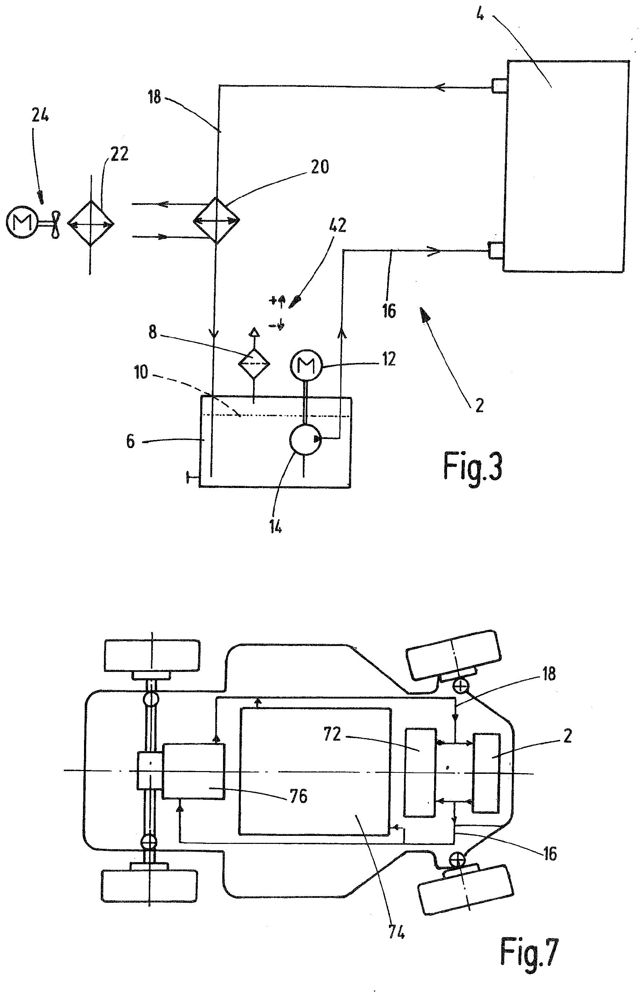

Die Fig. 3 zeigt die hydraulische Schaltung der erfindungsgemäßen Kühlvorrichtung, wobei ein halb-geschlossener Kühlkreislauf vorgesehen ist. Hierbei bildet der Vorratstank 6, der bis auf eine speziell ausgebildete Be- und Entlüftungseinrichtung zur Atmosphäre geschlossen ist, die Ausgleichseinrichtung. Das Vorhandensein eines Vorratstanks 6 eröffnet die Möglichkeit, als Versorgungspumpe eine Tauchpumpe 14 einzusetzen, die mit ihrem Pumpeneintritt unter das Fluidniveau 10 des Tanks 6 eintaucht. Die Be- und Entlüftungseinrichtung, die in Fig. 3 nicht näher dargestellt, sondern lediglich mit einem Doppelpfeil 42 verdeutlicht ist, ist am Belüftungsfilter 8 vorgesehen und durch ein Ventil gebildet, das bei einem vorgegebenen Tankinnendruck nach außen hin und bei einem vorgegebenen Tankunterdruck nach innen hin öffnet. Genauer gesagt, ist hierfür eine Ventilanordnung vorgesehen, die gegenläufig arbeitende, vorzugsweise federbelastete Rückschlagventile aufweist. Beim hier vorliegenden Beispiel sind für die Entlüftung ein Druckwert von + 0,5 bar und für eine Belüftung ein Druckwert von - 0,02 bar vorgesehen. Das Volumen des Vorratstanks 2 und das über dem Fluidniveau 10 befindliche Luftvolumen sind so gewählt, dass bei den bei normalem Betrieb sich ergebenden Temperaturänderungen die Druckgrenzwerte nicht überschritten sind und die Ventilanordnung der Be- und Entlüftungseinrichtung 42 geschlossen bleibt. Unter normalen Betriebsbedingungen erfolgt daher kein Luftaustausch mit der Atmosphäre. Wie beim geschlossenen System hat daher die Kühlflüssigkeit keinen Kontakt zur Atmosphäre, so dass kein Kühlmittelverlust durch Verdunstung oder ein Eintrag von Luftfeuchtigkeit und Schmutzpartikeln erfolgen. Anders als bei druckbeaufschlagtem, geschlossenem System ist das halb-geschlossene System auf einfache Weise befüllbar und die Vorteile der Tauchpumpe 14 sind gegenüber einer trocken aufgestellten Versorgungspumpe 28 nutzbar.

Die Fig. 4 zeigt ein Ausführungsbeispiel der Erfindung, bei dem sämtliche Komponenten des Kühlkreislaufs zu einer aufstellbaren Baueinheit zusammengefasst und auf einer gemeinsamen Trägerplatte 44 befestigt sind. Auf dieser sind, in Fig. 4 von links nach rechts, das Lüftergehäuse 46 des Kühlgebläses 24, von dem in der Figur lediglich ein Teil des Einlaufgitters gezeigt ist, und sich daran seitlich anschließend, der Vorratstank 6 angeordnet. Am Luftaustritt des Gebläsegehäuses 46 bildet der Lamellenkühler 22 die Rückwand des Gebläsegehäuses 46. Eine vom Lamellenwärmetauscher 22 zum Tankdeckel 48, auf dem der Motor 12 der Tauchpumpe 14 angebracht ist, verlaufende Schlauchleitung 50 bildet die Rücklaufleitung. Ein durchscheinender Wandabschnitt des Tanks 6 bildet eine Art Schauglas 54 und ermöglicht die Überwachung des Fluidniveaus 10 im Tank 6.

Die Fig. 5 zeigt ein weiteres Ausführungsbeispiel mit einem Wärmetauscher in Form eines Plattenwärmetauschers 20 für den Fluid/Fluid-Wärmeaustausch. Der Wärmetauscher 20 ist auf der Oberseite des Vorratstanks 6 angeordnet, der die Form eines im Umriss quadratischen Körpers mit zur Trägerplatte 44 senkrecht verlaufenden Seitenwänden 56 besitzt. In der ebenflächigen Oberseite 58 befindet sich eine zwischen zwei Seitenwänden 56 durchgehende stufenartige Vertiefung 60, in der der Wärmetauscher 20 in Form eines im Umriss an die Vertiefung 60 angepassten Quaders aufgenommen ist, der lediglich einen geringen Überstand über die sonstige Oberseite 58 besitzt. Im Bereich neben der Vertiefung 60 ist der Motor 12 der Tauchpumpe auf der Oberseite 58 angeordnet. Ein Rohrbogen 62 bildet die Rücklaufleitung vom Wärmetauscher 20 zum Tank 6. Im Füllstutzen 64, der sich in dem dem Motor 12 benachbarten Eckbereich der Oberseite 58 befindet, ist die Be- und Entlüftungseinrichtung 8 integriert. Am gleichen Eckbereich befindet sich an der in Fig. 5 sichtbaren Seitenwand 56 das Schauglas 54 für die Beobachtung des Fluidniveaus im Vorratstank 6.

Die Fig. 6 zeigt ein weiteres Ausführungsbeispiel, bei dem, wie beim Beispiel von Fig. 4, als Wärmetauscher ein Lamellenwärmetauscher 22 vorgesehen ist, der die Rückseite des Gebläsegehäuses 46 bildet. Wie bei Fig. 4 ist ein Motorgebläse 24 zum Erzeugen eines Kühlluftstroms vorgesehen, der an der Rückseite des Lamellenwärmetauschers 22 austritt. Anders als bei Fig. 4 ist der Vorratstank 6 mit dem Gebläsegehäuse 46 zu einer Einheit zusammengefasst und bildet zusammen mit dem Gehäuse 46 einen gemeinsamen Ständer 66, mit einem vom Gebläsegehäuse 46 vorstehenden Fußteil 68, das den Großteil des Vorratstanks 6 bildet und auf dessen Oberseite 70 der Motor 12 der Tauchpumpe angebracht ist. Vom Fußteil 68 erstreckt sich innerhalb des Gebläsegehäuses 46 ein Tankabteil zur Oberseite des Gebläsegehäuses 46 hin, wo sich der Füllstutzen 64 mit integrierter Be- und Entlüftungseinrichtung 8 sowie der Rohrbogen 62 der Rücklaufleitung befinden. Bei dieser Anordnung besitzt die Baueinheit einen im Wesentlichen quadratförmigen Grundriss.

Die Fig. 7 verdeutlicht schematisiert ein Beispiel des Einsatzes der erfindungsgemäßen Kühlvorrichtung 2 zur Kühlung von Komponenten eines batteriebetriebenen Fahrzeugs. Genauer gesagt handelt es sich bei diesen Komponenten um einen zu kühlenden Umrichter 72, eine zu kühlende Batterie 74 und einen zu kühlenden Elektromotor 76. In der schematisierten Darstellung sind die von der im Fahrzeugbug angeordneten Kühlvorrichtung 2 kommende Vorlaufleitung mit 16 und die das erwärmte Kühlmittel zur Kühlvorrichtung 2 rückführende Rücklaufleitung mit 18 bezeichnet. Zugeordnete nicht bezifferte Strömungspfeile verdeutlichen den Verlauf der Kühlmittelströme zwischen den Komponenten.

## Patentansprüche

1. Kühlvorrichtung, bestehend aus mindestens einem Kühlkreislauf, an den zumindest ein Verbraucher (4) angeschlossen ist, der im Normalbetrieb ein Kühlmittel von einer mittels eines Motors (12) antreibbaren Versorgungspumpe (14) aus einem Vorratstank (6) erhält, die als Tauchpumpe (14) ausgebildet und in das Kühlmittelniveau (10) im Vorratstank (6) eintauchend angeordnet ist und der das Kühlmittelniveau (10) im Vorratstank (6) angeschlossen ist, **dadurch gekennzeichnet, dass** der Kühlkreislauf in der Art eines halb-geschlossenen Kühlkreises ausgebildet ist, in dem das Innere des ansonsten zur Atmosphäre hin abgeschlossenen Vorratstanks (6) mit dieser über eine Be- und Entlüftungseinrichtung (42) verbindbar ist, deren eine Be- bzw. Entlüftung des Vorratstanks erlaubenden Druckgrenzwerte derart vorgegeben sind, dass im Normalbetrieb kein Austausch zwischen dem Inneren des Vorratstanks (6) und der Atmosphäre stattfindet und dass in einer ebenflächigen Oberseite (58) des Vorratstanks (6) sich eine zwischen zwei Seiten (56) durchgehende stufenartige Vertiefung (60) befindet, in der der Wärmetauscher (20) in Form eines im Umriss an die Vertiefung (60) angepassten Quaders aufgenommen ist, der lediglich einen geringen Überstand über die sonstige Oberseite (58) besitzt.

2. Kühlvorrichtung nach Anspruch 1, **dadurch gekennzeichnet, dass** der Motor (12) für die Tauchpumpe (14) außerhalb des Vorratstanks (6) angeordnet ist und dass die Abtriebswelle des Motors (12) mit der Pumpenwelle der Tauchpumpe (14), vorzugsweise mit dieser einstückig ausgebildet, fest verbunden ist und eine Abschlusswand des Vorratstanks (6) durchgreift.

3. Kühlvorrichtung nach Anspruch 1 oder 2, **dadurch gekennzeichnet, dass** die Be- und Entlüftungseinrichtung eine Ventilanordnung (42) aufweist, die sicherstellt, dass der Druckgrenzwert für eine Entlüftung höher ist als der Druckgrenzwert für eine Belüftung.

4. Kühlvorrichtung nach Anspruch 3, **dadurch gekennzeichnet, dass** die Ventilanordnung (42) gegenläufig arbeitende, vorzugsweise federbelastete, Rückschlagventile oder Blenden aufweist, die auf unterschiedliche Druckgrenzwerte zu ihrer Betätigung bzw. möglichem Durchlass eingestellt sind.

5. Kühlvorrichtung nach einem der vorstehenden Ansprüche, **dadurch gekennzeichnet, dass** der Druckgrenzwert für eine Entlüftung zwischen +0,2 bis + 0,7 bar, vorzugsweise bei + 0,5 bar, und für eine Belüftung zwischen - 0,01 bis - 0,05 bar, vorzugsweise bei - 0,02 bar, liegt.

6. Kühlvorrichtung nach einem der vorstehenden Ansprüche, **dadurch gekennzeichnet, dass** der Wärmetauscher ein Wärme über eine Kühlflüssigkeit abführender Plattenwärmetauscher (20) ist.

7. Kühlvorrichtung nach einem der vorstehenden Ansprüche, **dadurch gekennzeichnet, dass** zumindest der Wärmetauscher (20), der Vorratstank (6), vorzugsweise mit der Be- und Entlüftungseinrichtung (42), und der Motor (12) mit der Tauchpumpe (14) eine handelbare und aufstellbare Baueinheit bilden, deren Komponenten zumindest über eine Trägerplatte (44) miteinander verbunden sind.

8. Kühlvorrichtung nach einem der vorstehenden Ansprüche, **dadurch gekennzeichnet, dass** das Befüllen des Vorratstanks (6) aufgrund der Be- und Entlüftungseinrichtung (42) vor der Inbetriebnahme ohne Druckaufbau als Druckvorspannung für den Kühlkreislauf erfolgt.

9. Kühlvorrichtung nach einem der vorstehenden Ansprüche, **dadurch gekennzeichnet, dass** der Verbraucher eine Batterie (74) und/oder ein Umrichter (72) und/oder ein Motor (76) für ein zumindest teilweise batteriebetriebenes Fahrzeug ist.

## Claims

1. Cooling device consisting of at least one cooling circuit to which at least one consumer (4) is connected, which, in normal operation, receives a coolant out of a storage tank (6) from a supply pump (14) that can be driven by means of a motor (12), said pump being configured as a submersible pump (14) and arranged such that it is submerged in the coolant level (10) in the storage tank (6) and to which the coolant level (10) in the storage tank (6) is connected, **characterised in that** the cooling circuit is configured in the manner of a half-closed cooling loop, in which the interior of the storage tank (6), which is otherwise sealed off from the atmosphere, can be connected to the atmosphere via an aeration and venting apparatus (42), the pressure thresholds of which are set, to permit aeration or venting of the storage tank respectively, such that there is no exchange between the interior of the storage tank (6) and the atmosphere during normal operation and such that there is a step-like depression (60), passing between two sides (56), in a flat upper side (58) of the storage tank (6), in which depression the heat exchanger (20), in the form of a cuboid, the outline of which is adapted to the depression (60), is received, said heat exchanger protruding only slightly above the remaining upper side (58).

2. Cooling device according to claim 1, **characterised in that** the motor (12) for the submersible pump (14) is arranged outside the storage tank (6) and **in that** the drive shaft of the motor (12) is securely connected to the pump shaft of the submersible pump (14), preferably configured as an integral part thereof, and passes through an end wall of the storage tank (6).

3. Cooling device according to either claim 1 or claim 2, **characterised in that** the aeration and venting apparatus comprises a valve arrangement (42) which ensures that the pressure threshold for venting is higher than the pressure threshold for aeration.

4. Cooling device according to claim 3, **characterised in that** the valve arrangement (42) comprises restrictors or check valves operating in the opposite direction, preferably spring-loaded, which are set to different pressure thresholds for actuation thereof or potential through passage.

5. Cooling device according to any of the preceding claims, **characterised in that** the pressure threshold for venting is between +0.2 to +0.7 bar, preferably +0.5 bar, and between -0.01 to -0.05 bar, preferably -0.02 bar, for aeration.

6. Cooling device according to any of the preceding claims, **characterised in that** the heat exchanger is a plate heat exchanger (20) dissipating heat via a cooling liquid.

7. Cooling device according to any of the preceding claims, **characterised in that** at least the heat exchanger (20), the storage tank (6), preferably with the aeration and venting apparatus (42), and the motor (12) with the submersible pump (14) form a marketable and installable assembly, the components of which are connected to one another at least via a support plate (44).

8. Cooling device according to any of the preceding claims, **characterised in that** the storage tank (6) is filled by the aeration and venting apparatus (42) before commissioning without pressure building up as the pressure preload for the cooling circuit.

9. Cooling device according to any of the preceding claims, **characterised in that** the consumer is a battery (74) and/or an inverter (72) and/or a motor (76) for an at least partially battery-operated vehicle.

## Revendications

1. Installation de refroidissement, constituée d'au moins un circuit de refroidissement, auquel est raccordé au moins un consommateur (4), qui, en fonctionnement normal, reçoit d'un réservoir (6) un fluide réfrigérant par une pompe (14) d'alimentation pouvant être entraînée au moyen d'un moteur (12) et qui est constituée sous la forme d'une pompe (14) submersible, et qui est monté immergé dans le niveau (10) du fluide réfrigérant dans le réservoir (6) et auquel le niveau (10) du fluide réfrigérant dans le réservoir (6) est raccordé, **caractérisée en ce que** le circuit de refroidissement est constitué à la façon d'un circuit de refroidissement demi-fermé, dans lequel l'intérieur du réservoir (6), fermé sinon vis-à-vis de l'atmosphère, peut communiquer avec celui-ci par un dispositif (42) d'aération et de désaération, auquel sont prescrites des valeurs limites de pression permettant une aération et respectivement une désaération du réservoir, de manière à ce que, en fonctionnement normal, un échange n'ait pas lieu entre l'intérieur du réservoir (6) et l'atmosphère et **en ce que** dans une face (58) supérieure à surface plane du réservoir (6) se trouve une cavité (60) continue entre deux faces (56) à la manière d'un gradin, dans laquelle est reçu l'échangeur de chaleur (20) sous la forme d'un parallélépipède, qui est adapté au contour de la cavité (60) et qui dépasse seulement un peu du reste de la face (58) supérieure.

2. Installation de refroidissement suivant la revendication 1, **caractérisée en ce que** le moteur (12) de la pompe (14) submersible est disposé à l'extérieur du réservoir (6) et **en ce que** l'arbre de sortie du moteur (12) est assemblé de manière fixe à l'arbre de la pompe (14) submersible, en étant constitué de préférence d'une pièce avec celle-ci et traverse une paroi de fermeture du réservoir (6).

3. Installation de refroidissement suivant la revendication 1 ou 2, **caractérisée en ce que** le dispositif d'aération et de désaération a un agencement (42) de soupape, qui assure que la valeur limite de pression est plus grande pour une désaération que la valeur limite de pression pour une aération.

4. Installation de refroidissement suivant la revendication 3, **caractérisée en ce que** l'agencement (42) de soupape a des clapets anti-retour ou des diaphragmes fonctionnant en sens inverse, de préférence soumis à l'action de ressort, qui sont réglés sur des valeurs limites de pression différentes pour leur actionnement ou leur traversée éventuelle.

5. Installation de refroidissement suivant l'une des revendications précédentes, **caractérisée en ce que** la valeur limite de la pression pour une désaération va de + 0,2 à + 0,7 bar, en étant de préférence de + 0,5 bar, et pour une aération va de - 0,01 à - 0,05 bar, en étant de préférence de - 0,02 bar.

6. Installation de refroidissement suivant l'une des revendications précédentes, **caractérisée en ce que** l'échangeur de chaleur est un échangeur de chaleur (20) à plaques évacuant de la chaleur par un liquide de refroidissement.

7. Installation de refroidissement suivant l'une des revendications précédentes, **caractérisée en ce que** le au moins un échangeur de chaleur (20), le réservoir (6), de préférence avec le dispositif (42) d'aération et de désaération, et le moteur (12) avec la pompe (14) submersible forment une unité de construction pouvant être manipulée à la main et montée, dont les composants sont assemblés les uns aux autres, au moins par une plaque (44) de support.

8. Installation de refroidissement suivant l'une des revendications précédentes, **caractérisée en ce que** le remplissage du réservoir (6) s'effectue sans établissement d'une pression comme précontrainte de pression pour le circuit de refroidissement avant la mise en service, en raison du dispositif (42) d'aération et de désaération.

9. Installation de refroidissement suivant l'une des revendications précédentes, **caractérisée en ce que** le consommateur est une batterie (74) et/ou un convertisseur (72) et/ou un moteur (76) pour un véhicule fonctionnant au moins en partie sur batterie.
